# EUROPEAN PATENT SPECIFICATION

(11) **EP 2 743 187 B1**
(45) Date of publication and mention of the grant of the patent: **30.01.2019**
(21) Application number: 12008296.1
(22) Date of filing: 12.12.2012
(51) Int. Cl.: B64G 1/22, B64G 1/44

(54) **Spacecraft with at least one deployable panel structure and deployable panel structure**
Raumfahrzeug mit mindestens einer entfaltbaren Plattenstruktur und entfaltbare Plattenstruktur
Engin spatial pourvu d'au moins une structure de panneau déployable et structure de panneau déployable

(43) Date of publication of application: 18.06.2014
(73) Proprietor: Airbus Defence and Space GmbH, 82024 Taufkirchen (DE)
(72) Inventor: Engelke, Stefan, D-88677 Markdorf (DE)
(74) Representative: Schicker, Silvia

(56) References cited:
- EP-A1- 2 468 629
- EP-A1- 2 514 674
- US-B1- 6 284 966
- US-B1- 7 557 995

## Description

The present invention is directed to a spacecraft with at least one deployable panel structure and to such a deployable panel structure. In particular, such a panel structure is provided on a satellite.

An agile spacecraft like a satellite (in terms of an agile re-orientation between different pointing scenarios) with high resolution payload must provide a rigid structural platform to minimize distortions due to structural vibrations. Especially deployable panel structures like panel mounted solar arrays introduce low structural eigenfrequencies, which are difficult to damp passively and may interfere with the attitude control of the satellite. Body mounted solar arrays on the other hand have much better structural properties but their area is limited to the sun exposed surfaces of the body and they impact the thermal design of the satellite system.

Known countermeasures to increase the stiffness of deployable panel structures like panel mounted solar arrays are:
- Side struts or anchoring cables to support panel bending mode. This results in high complexity of the deploy mechanism and is thus not feasible for multiple deployment sequences. Furthermore, guy wires only work on tension. Other issues are: additional mass, shading issue, thermal gradients over the area of the solar array.
- Flaps along the panel edges which are deployed in a second deployment step require an additional mechanism. In this solution only the eigenfrequencies are raised while the increase of damping is marginal.

EP 2 514 674 A1 shows and describes a device for protection of an optical instrument of a satellite having a body to which the optical instrument is mounted and wherein the protection device comprises a plurality of rigid panel elements forming a hexagonal tube. This tube consists of a plurality of hexagonal structures of panel elements which are stored within one another in the storage position and which can be axially unfolded to the deployed position. This axial unfolding procedure is an unfolding of hexagonal structures of six panel elements mounted together to the respective hexagonal structure. Each hexagonal structure is connected to the adjacent hexagonal structure by articulated ball joints provided in the middle of the adjacent edges of two adjacent panel elements. Between each adjacent hexagonal panel element structure there are provided three locking devices which are designed to interlock two adjacent panel elements of the same hexagonal panel element structure. The interlocking portions of the interlocking device get into mutual interengagement automatically when the unfolding procedure is going to terminate.

US 7,557,995 B1 is directed to a deployable telescope shade comprising a plurality of pivotable panels arranged circumferentially about a common central axis. Each pivotable panel is configured to pivot about a hinge axis oriented in a plane substantially perpendicular to the common central axis. This tubular arrangement of pivotable panels can be moved from a collapsed state of the shade assembly forming a closed structure to a deployed state forming an opening for the telescope. Interleaved panels are provided between the pivotable panels wherein each interleaved panel is hingedly connected to the adjacent pivotable panel wherein the interleaved panels are each comprised of two hingedly connected section panels.

EP 2 468 629 A1 shows and describes an unfoldable reflector device comprising a plurality of panel elements hinged together. Only one of the panel elements is hingedly connected to a structure of e.g. a satellite and the other panel elements are hingedly connected to this first panel element and are hingedly interconnected.

It is an object of the present invention to provide a spacecraft with at least one deployable panel structure which is suitable for use with an agile spacecraft carrying a high resolution payload. It is a further object to provide a spacecraft with at least one such panel structure.

The first object is achieved by a deployable panel structure with the features of claim 1.

This deployable panel structure for a spacecraft, comprises a first panel element hingedly connected to a support element so that the first panel element can be hinged out about a first hinge axis from a storage position to a deployed position; a second panel element hingedly connected to said support element so that the second panel element can be hinged out about a second hinge axis from a storage position to a deployed position wherein the first hinge axis and the second hinge axis are not parallel; and a connecting mechanism adapted to interconnect the first panel element with the second panel element when both panel elements are deployed in order to establish a connection between both panel elements, said connecting mechanism comprising a first lock element associated to one of two adjacent panel elements and a second lock element associated to the other one of the two adjacent panel elements and in that the second panel element is configured to be shifted laterally by a drive mechanism towards the already deployed first panel element in its deployed end position in order to bring the lock elements into an interengaged position. This proposed design of a deployable panel structure uses panels which can pivot around an associated axis wherein the axes are not parallel. This results in a configuration where the panels after deployment are not in the same plane so that adjacent panels can come into a linear contact along an edge of at least one of the adjacent panels by shifting laterally the other panel. This mutual contact together with an interconnection between the panels provided by the connecting mechanism leads to a very stiff and rigid panel structure.
The main advantage of the panel structure design of the invention is a rigid panel configuration without an additional deployment of supporting structures.
A preferred embodiment of the present invention is characterized in that at least one further panel element is hingedly connected to said support element so that the at least one further panel element can be hinged out about a further hinge axis from a storage position to a deployed position wherein the further hinge axis is not parallel to the hinge axis of an adjacent one of the panel elements; and a connecting mechanism adapted to interconnect the further panel element with said adjacent panel element when both panel elements are deployed in order to establish a rigid connection between the further panel element and the adjacent panel element. Such a provision of additional panel elements can lead to a deployable panel structure with three or more panel elements forming a closed panel structure, like e.g. a hexagon, or an open panel structure, e.g. of a rectangular wave form.

Preferably, the hinge axes of two adjacent interconnectable panel elements are positioned in a common plane or in parallel planes.

In another embodiment of the invention the hinge axes of two adjacent interconnectable panel elements are inclined to each other, preferably under an angle of 90°.

The connecting mechanism of the deployable panel structure according to the present invention comprises a drive mechanism adapted to move the first lock element and/or the second lock element relative to each other in order to bring the lock elements into an interengaged position. The interengagement between the two lock elements leads to a very stiff and rigid connection of two adjacent panel elements.

One preferred embodiment of this connecting mechanism is designed with first and second lock elements defining a tongue-and-groove connection when they are interengaged.

Preferably, the drive mechanism comprises a spring. Spring actuators are very reliable in space and need no electrical power supply.

It is very advantageous when the spring is provided in the hinge of one of the adjacent panel elements and biases said one panel element against the other one of the adjacent panel elements when both panel elements have reached their deployed state. This is a very compact design in which the spring actuator integrated in the hinge is protected during launch and early operation, i.e. before deployment of the panel structure, by the panels and a possibly provided cover of the panel structure.

Preferably, the panel elements comprise solar cells so that each panel element defines a solar array.

A preferred use of the deployable panel structure is on a spacecraft wherein the support element is provided at the spacecraft body.

In an advanced application of the deployable panel structure of the present invention on a spacecraft two or more deployable panel structures are provided at different locations of the spacecraft, preferably at locations opposite to each other with respect to a longitudinal axis of the spacecraft. This design allows the spacecraft to be provided with a plurality of panel elements and leads to a very compact design where the panel elements are very close to the rotational or longitudinal axis of the spacecraft so that the moment of inertia around this axis is very low, despite the plurality of panel elements, as compared with a deployable folded structure of panel elements which have in their deployed state a larger radial extension than the panel structure according to the present invention.

The panels are deployed in sequence from the support element, e.g. a side panel of the spacecraft housing, where they are stowed in sandwich configuration during launch and early operation. Each panel element is attached to the support element directly with a hinge. During or after deployment, the panel elements are interconnected with the connecting mechanism, e.g. a snap-in mechanism at the panel edges or corners, yielding a stiff and rigid structure. The connecting mechanism can also be designed to increase the vibrational damping between the panel elements by a passive damping mechanism, a semi-passive, a semi-active or an active vibration control means.

The non-parallel orientation of the panels, which is preferably perpendicular, offers in case of solar panels a stable power generation over one orbit of the spacecraft (e.g. a satellite).

As an additional advantage, the mounting points for the connecting mechanism, e.g. the snap-in mechanism, can be designed to increase the damping of the low frequency bending and tortional modes. Thus the vibration of the panel elements decays faster after agile manoeuvres of the spacecraft (satellite).

The invention is not only directed to solar panels but also applicable to other large space-deployed structures, including, but not limited to: antennas, baffles and sun shields.

Although the panel structure is claimed as part of a spacecraft, the present invention is also directed to the deployable panel structure itself as defined in the claims as a part of a spacecraft. Thus, the second object underlying the invention is solved by a deployable panel structure with the features of claim 11. Preferred embodiments thereof are claimed in the subclaims depending therefrom. The advantages achieved with these inventive panel structures are the same as already explained with the spacecraft according to the invention.

The present invention is now described in detail with reference to the drawings in which
- **Fig. 1**: shows a perspective view of a satellite provided with a panel structure according to the invention;
- **Fig. 2**: shows a cross section of two adjacent panels just before the lock elements of the connecting mechanism get into mutual interconnection;
- **Fig. 3**: shows the deployment of the panel elements of the panel structure in four steps.

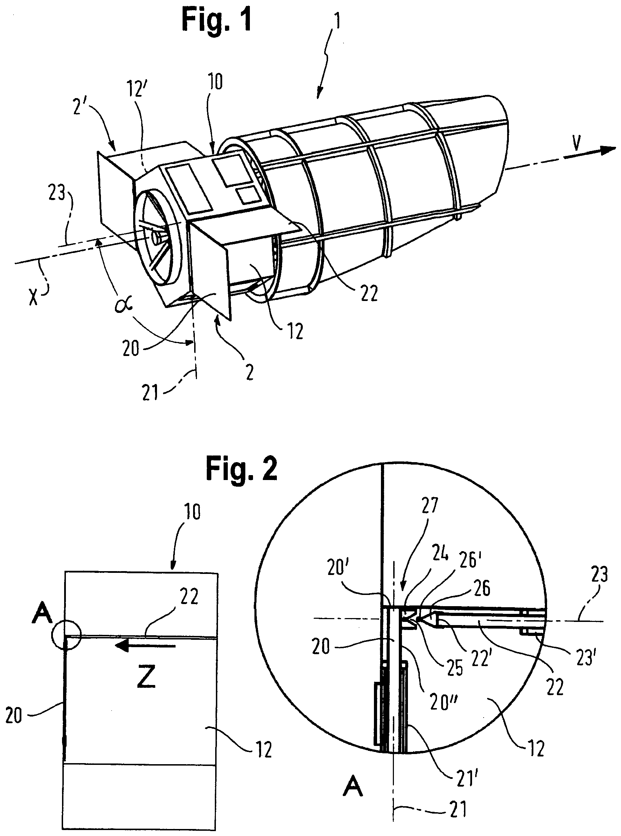

Fig. 1 shows a spacecraft 1 which is an agile satellite for earth observation with a high resolution camera. This satellite can be directed to an area of interest to be observed. In order to obtain high resolution information the satellite has to be exactly placed and kept over the area of interest. In order to allow quick agile changes of the viewing direction V of the satellite sensors every vibration subsequent to a change of orientation of the satellite is to be avoided.

The spacecraft 1 has a spacecraft body 10 which is in the shown example of hexagonal shape. Two opposite sides of the hexagonal spacecraft body 10 define or comprise support elements 12, 12' to which a respective deployable panel structure 2, 2' is mounted. The deployable panel structures 2, 2' have the same design so that hereinafter an explanation will be given only for the deployable panel structure 2. The same explanations apply thus to the second deployable panel structure 2'.

The spacecraft 1 has a spacecraft body 10 which is in the shown example of hexagonal shape. Two opposite sides of the hexagonal spacecraft body 10 define or comprise support elements 12, 12' to which a respective deployable panel structure 2,2' is mounted. The deployable panel structures 2,2' have the same design so that hereinafter an explanation will be given only for the deployable panel structure 2. The same explanations apply thus to the second deployable panel structure 2'.

The deployable panel structure 2 comprises a first panel element 20 which is hingedly connected to the support element 12 and is thus pivotable about a first hinge axis 21. This design allows the first panel element 20 to be pivoted or hinged out from a storage position to a deployed position shown in Fig. 1.

A second panel element 22 is also hingedly connected to said support element 12 and is thus pivotable about a second hinge axis 23. Thus, also the second panel element 22 can be pivoted or hinged out about said second hinge axis 23 from a storage position to a deployed position shown in Fig. 1.

As can be seen from Fig. 1 the hinge axes 21 and 23 extend in a common plane but under an angle α of 90°. Consequently, the first panel element 20 and the second panel element 22 are in their deployed positions perpendicular to each other.

Once the first panel element 20 and the second panel element 22 have reached their deployed positions as shown in Fig. 1 a connecting mechanism (Fig. 2) interconnects both panel elements 20, 22 in order to establish a rigid and stiff connection between both panel elements 20, 22. Such a rigid and stiff connection is vibration resistant in response to a re-alignment of spacecraft 1.

Especially for geostationary observation satellites, a perpendicular alignment of the solar array is a suitable configuration in terms of the sun aspect angle. Assuming the satellite is pointing towards a planet as shown in Fig. 1 by the viewing direction V, it still can be rotated about the roll axis or longitudinal axis X (axis towards the planet), to always expose one of the panel elements 20, 22 to the sun. During one orbit of the geostationary satellite, the sun aspect angle is rotated from one to the other panel. For the shown configuration of two perpendicular panel elements on each side of body 10, the sun aspect angle leads only for night local time to a low illumination of the panels. This can be solved by adding a third panel, which is deployed in an additional step towards the right edge of the main structure (in Fig. 1). With this configuration the available power of the fixed solar generator is kept stable over the orbit without any vibrations due to a rotational mechanism. Furthermore, the proposed mounting is much stiffer than a solar array drive mechanism, which reduces the stiffness due to the rotational hinges.
In the case of the illustrated two panel configuration, the satellite can switch to a maintenance pointing during night time by rotating the satellite to expose both panels to the sun.

The invention is advantageous not only for geostationary (GEO) satellites, but also for low earth orbit (LEO) satellites. It is of particular benefit when high stiffness is required, e.g. to maintain a highly stable Line-of-Sight (LoS), and when agility of the satellite is required.

In this description the principle of the invention is explained with a two panel configuration. However, the concept of the inventive panel structure with interconnecting panel elements is not limited to two perpendicular panel elements.

Fig. 2 shows a connecting mechanism 27 provided to interconnect the first panel element 20 and the second panel element 22 in their deployed position. The first panel element 20 is equipped along its upper edge 20' on the inner rear face 20" of panel element 20 with a rib member 24 having a V-groove 25 facing to an adjacent edge 22' of the second panel element 22 and defining a first lock element. This adjacent edge 22' of the second panel element 22 is provided with a ridge member 26. The ridge member 26 is facing towards the groove 25 and is provided with an outer shape adapted to the V-shape of groove 25 so that the free end 26' of the ridge member 26 which defines a second lock element can be accommodated in the groove 25. It can be seen in the enlarged portion A of Fig. 2 that the first panel element 20 is hingedly connected to the support element 12 by a hinge 21' that allows pivotable movement of the first panel element 20 about the first hinge axis 21.

In the same way the second panel element 22 is hingedly connected to the support element 12 by a hinge 23' which allows pivotable movement of a second panel element 22 about the second hinge axis 23.

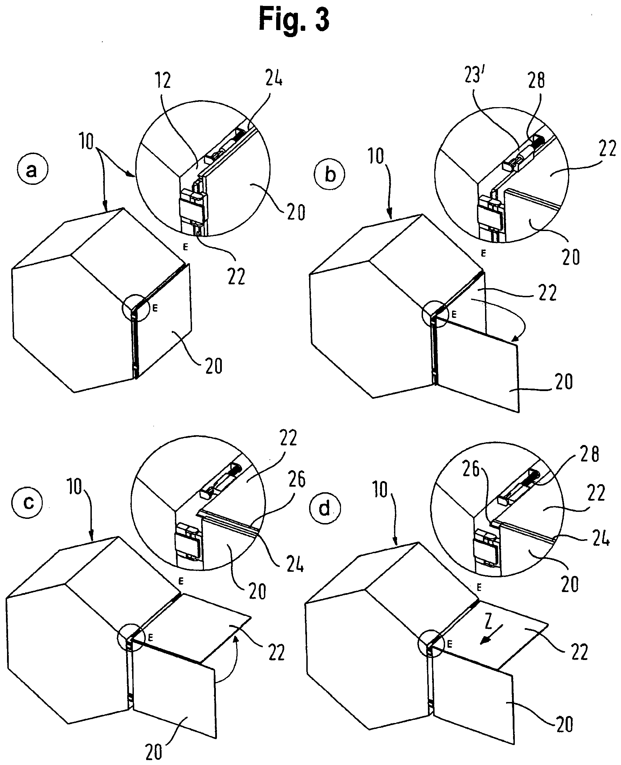

The rib member 24 and the ridge member 26 are both flexible profiles which allow a safe mechanical snap-in and which combine the interconnection with a high passive damping. The lateral shifting of the deployed second panel element 22 towards the already deployed first panel element 20 (arrow Z) allows a snap-in of the free end 26' of panel edge 22' along the whole extension thereof to the already deployed perpendicular extending first panel element 20. As a possible suitable material for the flexible rib member 24 and the flexible ridge member 26 a fluoroelastomer is proposed due the high material damping, low outgassing property and a temperature range up to 200°C. The deployment and interconnecting sequence is now explaned with reference to fig. 3.

Fig. 3 shows the deployment and interconnection sequence in four steps. Step a) shows the first panel element 20 and the second panel element 22 in their storage position in which both panel elements 20,22 are substantially parallel and parallel to the wall portion of a spacecraft body 10 defining the support element 12 or provided therewith.

In step b) the first panel element 20 is already deployed whereas the second panel element 22 is still in its storage position. A helical spring 28 provided in the second hinge 23' of the second panel element 22 is kept in a compressed state.

In step c) also the second panel element 22 has reached its deployed position whereas spring 28 is still compressed. Rib element 24 and ridge element 26 are still spaced apart from one another.

In step d) spring 28 is released and has biased the second panel element 22 towards the first panel element 20 which is symbolized by arrow Z. Consequently, ridge element 26 and rib element 24 are interengaged wherein the free end 26' of ridge member 26 is accommodated in the V-shaped groove 25 of the rib member 24. Thus, spring 28 works as a drive mechanism.

Fig. 3 shows thus the principle of the deployment phase. In a first step, most of the hold downs which are used to support the panel elements during launch are cut to release the first, outer panel element 20, while still holding the second, inner panel element 22. When the outer panel element 20 is fully deployed, the remaining hold downs are cut to release the inner panel element 22, which then connects to the outer panel element 20 in a final step. As an example of mechanical snap-in of the panels, the inner panel element 22 is shifted towards the outer panel element 20 at the end position in step d).

Compared to alternative support mechanisms as side struts or anchoring cables, the proposed design provides the following advantages:
- The complexity of a snap-in mechanism is lower than an additional deployment of support structures.
- Less additional mass is required, since the profile is completely used as payload for the solar generator.
- The perpendicular configuration avoids shading issues.
- While guy wires work only on tension, the profile shape supports the panel elements in both directions.
- Connected support structures may lead to temperature gradients due to different thermal conductance properties. In the proposed design all panel elements are made of the same material lamination.

As already mentioned, the connection of the panels can be initiated by a shift of the second panel element 22 towards the already deployed first panel element 20 according to step d) in Fig. 3. To realize an automatic shifting at the end position of the second panel element 22 a hinge mechanism 23', 28 as shown in the detailed views "E" of Fig. 3 can be used. The spring 28 pushes the second panel element 22 to the left (in Fig. 3) as soon as it reaches the fully deployed state.

Several types of snap-in mechanisms to interconnect the panel elements after deployment are proposed:
- Mechanical snap-in by flexible profiles along the panel element edges as described above.
- Mechanical snap-in by positive locking, initiated by an electrical signal or by a mechanical trigger at an arrester.
- Magnetic snap-in by permanent magnets or solenoid.
- Metallic or conventional Velcro.

The intention of the shown interconnection between the panel elements is twofold:
1. The L-shape of the combined panel elements increases the stiffness and therefore the eigenfrequencies of the deployable panel structure.
2. By the utilization of a damping mechanism (e.g. elastic material) at the interconnection between the panel elements, the damping of the low frequency tortional and bending modes is increased. Thus, the vibration of the panel structure with e.g. solar arrays decays faster after agile maneuvers of the spacecraft (satellite).

In addition, the principle of the so-called pervasive damping is explained at the example of the first torsional modes. Large displacements of the corresponding mode shapes of two perpendicular panel elements are observed along the edges between both panels. This leads to a high relative velocity between both panel elements during a vibration of these modes. Connecting the panel elements will obviously change both mode shapes depending on the stiffness of the connection. However, designing the connection to still allow relative motion between the panels enables the usage of a damping mechanism to dissipate the oscillation energy. This reduces also the oscillation amplitude at the free end of the respective panel element. The same principle applies for bending modes, where the free edges of each panel element oscillate in phase.

As a result, the proposed configuration of sequentially deployed, interconnected panels is applicable not only to solar arrays, but also to other large space-deployed structures, including, but not limited to: antennas, baffles and sun shields.

Four types of damping concepts are possible for the proposed panel structure:
- Passive damping, utilizing materials with high material damping or using a dashpot setup between the panel elements.
- Semi-active concepts, utilizing friction between the moving parts, where the friction parameters - e.g. the normal contact force - is controlled actively to maximize energy dissipation.
- Semi-passive concepts, utilizing electro-mechanical transducers like piezoelectric materials to transform the mechanical into electric energy. A passive electrical network, connected to the transducers, is tuned to the eigenfrequencies of the structure to maximize energy dissipation within the network.
- An active vibration control measures the state of oscillation and drives actuators like piezoelectric transducers to damp the structure.
The invention is not restricted to the above-described exemplary embodiment, which only serves for a general explanation of the core concept of the invention. Rather more, it is within the scope of protection that the spacecraft and the deployable panel structure in accordance with the invention could also adopt different forms than those of the embodiments described above within the scope of the claims. The reference symbols in the claims, the description and the drawings serve only to provide a better understanding of the invention and are not intended to limit the scope of protection.

### Bezugszeichenliste

- 1: spacecraft
- 2: deployable panel structure
- 2': deployable panel structure
- 10: spacecraft body
- 12: support element
- 12': support element
- 20: first panel element
- 21: first hinge axis
- 21': first hinge
- 22: second panel element
- 22': egde of 22
- 23: second hinge axis
- 23': second hinge
- 24: rib member
- 25: V-groove
- 26: second lock element
- 26': free end of 26
- 27: connecting mechanism
- 28: spring
- X: longitudinal axis

## Claims

1. A deployable panel structure for a spacecraft comprising:
- a first panel element (20) hingedly connected to a support element (12, 12') so that the first panel element (20) can be hinged out about a first hinge axis (21) from a storage position to a deployed position;
- a second panel element (22) hingedly connected to said support element (12, 12') so that the second panel element (22) can be hinged out about a second hinge axis (23) from a storage position to a deployed position wherein the first hinge axis (21) and the second hinge axis (23) are not parallel; and
- a connecting mechanism (27) adapted to interconnect the first panel element (20) with the second panel element (22) when both panel elements are deployed in order to establish a connection between both panel elements (20, 22);
- said connecting mechanism (27) comprising a first lock element (25) associated to one (20) of two adjacent panel elements and a second lock element (26) associated to the other one (22) of the two adjacent panel elements (20, 22); **characterised in that**
- the second panel element (22) is configured to be shifted laterally by a drive mechanism (28) towards the already deployed first panel element (20) in its deployed end position in order to bring the lock elements into an interengaged position.

2. A deployable panel structure according to claim 1,
**characterized in that**
- at least one further panel element is hingedly connected to said support element (12, 12') so that the at least one further panel element can be hinged out about a further hinge axis from a storage position to a deployed position wherein the further hinge axis is not parallel to the hinge axis of an adjacent one of the panel elements; and
- a connecting mechanism adapted to interconnect the further panel element with said adjacent panel element when both panel elements are deployed in order to establish a rigid connection between the further panel element and the adjacent panel element, wherein the further panel element is configured to be is shifted laterally towards the already deployed adjacent panel element in the deployed end position.

3. A deployable panel structure according to claim 1 or 2, **characterized in that**
- the hinge axes (21, 23) of two adjacent interconnectable panel elements (20, 22) are positioned in a common plane or in parallel planes
and/or
- the hinge axes (21, 23) of two adjacent interconnectable panel elements (20, 22) are inclined to each other, preferably under an angle (a) of 90°.

4. A deployable panel structure according to one of the preceding claims,
**characterized in that** the connecting mechanism (27) comprises the drive mechanism (28), wherein
- the drive mechanism (28) is adapted to move the first lock element (25) and/or the second lock element (26) relative to each other in order to bring the lock elements (25, 26) into an interengaged position,
- wherein the first and second lock elements (25, 26) preferably define a tongue-and-groove connection.

5. A deployable panel structure according to one of the preceding claims, **characterized in that**
- the drive mechanism (28) comprises a spring;
- wherein the spring is preferably provided in the hinge (23') of one of the adjacent panel elements (20, 22) and biases said one panel element (22) against the other one (20) of the adjacent panel elements when both panel elements have reached their deployed state.

6. A deployable panel structure according to one of the preceding claims, **characterized in that**
the connecting mechanism is designed as a damping mechanism.

7. A deployable panel structure according to one of the preceding claims, **characterized in that**
the panel elements (20, 22) comprise solar cells so that each panel element (20, 22) defines a solar array.

8. A spacecraft (1) with at least one deployable panel structure (2, 2') according to one of the preceding claims wherein the support element (12, 12') is provided at the spacecraft body (10).

9. A spacecraft according to claim 8,
**characterized in that**
two or more deployable panel structures (2, 2') are provided at different locations of the spacecraft (1), preferably at locations opposite to each other with respect to a longitudinal axis (X) of the spacecraft (1).

## Patentansprüche

1. Entfaltbare Paneelstruktur für ein Raumfahrzeug, umfassend:
- ein erstes Paneelelement (20), das schwenkbar mit einem Trägerelement (12, 12') verbunden ist, sodass das erste Paneelelement (20) um eine erste Schwenkachse (21) aus einer Verstauposition in eine entfaltete Position ausgeschwenkt werden kann;
- ein zweites Paneelelement (22), das schwenkbar mit dem Trägerelement (12, 12') verbunden ist, sodass das zweite Paneelelement (22) um eine zweite Schwenkachse (23) von einer Verstauposition in eine entfaltete Position ausgeschwenkt werden kann, wobei die erste Schwenkachse (21) und die zweite Schwenkachse (23) nicht parallel sind; und
- einen Verbindungsmechanismus (27), der zum Verbinden des ersten Paneelelements (20) mit dem zweiten Paneelelement (22) ausgebildet ist, wenn beide Paneelelemente entfaltet sind, um eine Verbindung zwischen beiden Paneelelementen (20, 22) herzustellen;
- wobei der Verbindungsmechanismus (27) ein erstes Verriegelungselement (25), das einem (20) von zwei benachbarten Paneelelementen zugeordnet ist, und ein zweites Verriegelungselement (26) umfasst, das dem anderen (22) der beiden benachbarten Paneelelemente (20, 22) zugeordnet ist;
**dadurch gekennzeichnet, dass** das zweite Paneelelement (22) dazu eingerichtet ist, durch einen Antriebsmechanismus (28) seitlich in Richtung des bereits entfalteten ersten Paneelelements (20) in seine entfaltete Endposition verschoben zu werden, um die Verriegelungselemente in eine ineinandergreifende Position zu bringen.

2. Entfaltbare Plattenstruktur nach Anspruch 1,
**dadurch gekennzeichnet, dass**
- mindestens ein weiteres Paneelelement schwenkbar mit dem Trägerelement (12, 12') verbunden ist, sodass das mindestens eine weitere Paneelelement um eine weitere Schwenkachse aus einer Verstauposition in eine entfaltete Position ausgeschwenkt werden kann, wobei die weitere Schwenkachse nicht parallel zur Schwenkachse eines der benachbarten Paneelelemente ist; und
- ein Verbindungsmechanismus zum Verbinden des weiteren Paneelelements mit dem benachbarten Paneelelement ausgebildet ist, wenn beide Paneelelemente entfaltet sind, um eine starre Verbindung zwischen dem weiteren Paneelelement und dem benachbarten Paneelelement herzustellen, wobei das weitere Paneelelement dazu eingerichtet ist, seitlich in Richtung des bereits entfalteten benachbarten Paneelelements in die entfaltete Endposition verschoben zu werden.

3. Entfaltbare Plattenstruktur nach Anspruch 1 oder 2,
**dadurch gekennzeichnet, dass**
- die Schwenkachsen (21, 23) der beiden benachbarten miteinander verbindbaren Paneelelemente (20, 22) in einer gemeinsamen Ebene oder in parallelen Ebenen positioniert sind
und/oder
- - die Schwenkachsen (21, 23) der beiden benachbarten miteinander verbindbaren Paneelelemente (20, 22) zueinander geneigt sind, vorzugsweise mit einem Winkel (α) von 90°.

4. Entfaltbare Plattenstruktur nach einem der vorhergehenden Ansprüche, **dadurch gekennzeichnet, dass** der Verbindungsmechanismus (27) den Antriebsmechanismus (28) umfasst, wobei
- der Antriebsmechanismus (28) dazu eingerichtet ist, das erste Verriegelungselement (25) und/oder das zweiten Verriegelungselement (26) relativ zueinander zu bewegen, um die Verriegelungselemente (25, 26) in eine ineinandergreifende Position zu bringen,
- wobei das erste und das zweite Verriegelungselement (25, 26) bevorzugt eine Nut-und-Feder-Verbindung bilden.

5. Entfaltbare Plattenstruktur nach einem der vorhergehenden Ansprüche,
**dadurch gekennzeichnet, dass**
- der Antriebsmechanismus (28) eine Feder umfasst;
- wobei die Feder vorzugsweise im Scharnier (23') von einem der benachbarten Paneelelemente (20, 22) vorgesehen ist und das eine Paneelelement (22) gegen das andere (20) der benachbarten Paneelelemente vorspannt, wenn beide Paneelelemente ihren entfalteten Zustand erreicht haben.

6. Entfaltbare Plattenstruktur nach einem der vorhergehenden Ansprüche,
**dadurch gekennzeichnet, dass**
der Verbindungsmechanismus als Dämpfmechanismus ausgelegt ist.

7. Entfaltbare Plattenstruktur nach einem der vorhergehenden Ansprüche,
**dadurch gekennzeichnet, dass**
die Paneelelemente (20, 22) Solarzellen umfassen, sodass jedes Paneelelement (20, 22) eine Solarzellengruppe bildet.

8. Raumfahrzeug (1) mit mindestens einer entfaltbaren Plattenstruktur (2, 2') gemäß einem der vorhergehenden Ansprüche wobei das Trägerelement (12, 12') am Raumfahrzeugkörper (10) vorgesehen ist.

9. Raumfahrzeug nach Anspruch 8,
**dadurch gekennzeichnet, dass**
zwei oder mehr entfaltbare Plattenstrukturen (2, 2') an verschiedenen Stellen des Raumfahrzeugs (1) vorgesehen sind, vorzugsweise an bezüglich einer Längsachse (X) des Raumfahrzeugs (1) einander gegenüberliegenden Stellen.

## Revendications

1. Structure de panneau déployable pour un engin spatial, comprenant :
- un premier élément de panneau (20) relié de manière articulée à un élément de support (12, 12') de telle sorte que le premier élément de panneau (20) peut être articulé autour d'un premier axe d'articulation (21) d'une position de stockage à une position déployée ;
- un second élément de panneau (22) relié de manière articulée audit élément de support (12, 12') de telle sorte que le second élément de panneau (22) peut être articulé autour d'un second axe d'articulation (23) d'une position de stockage à une position déployée, le premier axe d'articulation (21) et le second axe d'articulation (23) n'étant pas parallèles ; et
- un mécanisme de liaison (27) conçu pour relier le premier élément de panneau (20) au second élément de panneau (22) lorsque les deux éléments de panneau sont déployés, afin d'établir une liaison entre les deux éléments de panneau (20, 22) ;
- ledit mécanisme de liaison (27) comprenant un premier élément de verrouillage (25) associé à l'un (20) des deux éléments de panneau adjacents et un second élément de verrouillage (26) associé à l'autre (22) des deux éléments de panneau adjacents (20, 22) ; **caractérisée par le fait que** :
- le second élément de panneau (22) est configuré pour être déplacé latéralement par un mécanisme d'entraînement (28) vers le premier élément de panneau (20) déjà déployé, dans sa position déployée extrême, afin d'amener les éléments de verrouillage dans une position engagés réciproquement.

2. Structure de panneau déployable selon la revendication 1,
**caractérisée par le fait que** :
- au moins un élément de panneau supplémentaire est relié de manière articulée audit élément de support (12, 12') de telle sorte que l'au moins un élément de panneau supplémentaire peut être articulé autour d'un axe d'articulation supplémentaire d'une position de stockage à une position déployée, l'axe d'articulation supplémentaire n'étant pas parallèle à l'axe d'articulation d'un élément de panneau adjacent parmi les éléments de panneau ; et
- un mécanisme de liaison conçu pour relier l'élément de panneau supplémentaire audit élément de panneau adjacent lorsque les deux éléments de panneau sont déployés afin d'établir une liaison rigide entre l'élément de panneau supplémentaire et l'élément de panneau adjacent, l'élément de panneau supplémentaire étant configuré pour être déplacé latéralement vers l'élément de panneau adjacent déjà déployé dans la position déployée extrême.

3. Structure de panneau déployable selon la revendication 1 ou 2,
**caractérisée par le fait que** :
- les axes d'articulation (21, 23) de deux éléments de panneau adjacents aptes à être reliés entre eux (20, 22) sont positionnés dans un plan commun ou dans des plans parallèles, et/ou
- les axes d'articulation (21, 23) de deux éléments de panneau adjacents aptes à être reliés entre eux (20, 22) sont inclinés l'un par rapport à l'autre, de préférence à un angle (α) de 90°.

4. Structure de panneau déployable selon l'une des revendications précédentes, **caractérisée par le fait que** le mécanisme de liaison (27) comprend le mécanisme d'entraînement,
- le mécanisme d'entraînement (28) étant conçu pour déplacer le premier élément de verrouillage (25) et/ou le second élément de verrouillage (26) l'un par rapport à l'autre afin d'amener les éléments de verrouillage (25, 26) dans une position engagés réciproquement,
- les premier et second éléments de verrouillage (25, 26) définissant, de préférence, une liaison à languette et rainure.

5. Structure de panneau déployable selon l'une des revendications précédentes, **caractérisée par le fait que** :
- le mécanisme d'entraînement (28) comprend un ressort ;
- le ressort étant, de préférence, disposé dans l'articulation (23') de l'un des éléments de panneau adjacents (20, 22) et sollicitant ledit élément de panneau (22) contre l'autre (20) des éléments de panneau adjacents lorsque les deux éléments de panneau ont atteint leur état déployé.

6. Structure de panneau déployable selon l'une des revendications précédentes, **caractérisée par le fait que** :
le mécanisme de liaison est agencé comme un mécanisme d'amortissement.

7. Structure de panneau déployable selon l'une des revendications précédentes, **caractérisée par le fait que** :
les éléments de panneau (20, 22) comprennent des photopiles de telle sorte que chaque élément de panneau (20, 22) définit une batterie solaire.

8. Engin spatial (1) avec au moins une structure de panneau déployable (2, 2') selon l'une des revendications précédentes, l'élément de support (12, 12') étant disposé au niveau du corps d'engin spatial (10).

9. Engin spatial selon la revendication 8,
**caractérisé par le fait que** :
au moins deux structures de panneau déployables (2, 2') sont disposées à différents emplacements de l'engin spatial (1), de préférence à des emplacements opposés l'un à l'autre par rapport à un axe longitudinal (X) de l'engin spatial (1).
